# EUROPEAN PATENT SPECIFICATION

(11) **EP 1 743 934 B1**
(45) Date of publication and mention of the grant of the patent: **27.10.2010**
(21) Application number: 05727321.1
(22) Date of filing: 30.03.2005
(51) Int. Cl.: C12G 3/04

(54) **ALCOHOLIC DRINK CONTAINING MACA EXTRACT**
ALKOHOLISCHES GETRÄNK MIT MACA-EXTRAKT
BOISSON ALCOOLISÉE CONTENANT DE L'EXTRAIT DE MACA

(30) Priority: 30.03.2004 JP 2004097556; 07.01.2005 JP 2005002093
(43) Date of publication of application: 17.01.2007
(73) Proprietor: Suntory Holdings Limited, Kita-ku, Osaka-shi Osaka 530-8203 (JP)
(72) Inventor: MATSUMOTO, Takehiro, 5630032 (JP); KATO, Megumi, 6650015 (JP)
(74) Representative: Vossius & Partner
(86) International application number: PCT/JP2005/006013
(87) International publication number: WO 2005/095573

(56) References cited:
- JP-A- 2004 000 171
- SUNTORY NEWS RELEASE, [Online] no. 8691, 01 March 2004, XP002997055 Retrieved from the Internet: <URL:http://www.suntroy.co.jp/news/2004/869 1.html>
- DE ARITPMI R.F. ET AL.: 'Peru Andes Chiho no Nosakubutsu to sono Eiyoka.' JOURNAL OF COOKERY SCIENCE OF JAPAN. vol. 1, no. 3, 20 August 1998, pages 255 - 257, XP002997056
- LI G. ET AL.: 'Glucosinolate contents in maca (Lepidium peruvianum Chacon) seeds,sprouts, mature plants and several derived comecial products.' ECONOMIC BOTANY vol. 55, no. 2, 2001, pages 255 - 262, XP002997057
- HERRAIZ M. ET AL.: 'Analysis of wine distillaties made from Muscat grapes (Pisco) by multidimensional gas chromatography and mass spectrometry.' JOURNAL OF AGRICULTURAL AND FOOD CHEMISTRY vol. 38, no. 7, 1990, pages 1540 - 1543, XP002997058

## Description

The present invention relates to an alcoholic beverage containing an extract of maca that is a plant of the mustard family and a method for manufacturing such an alcoholic beverage.

In recent years, various functional drinks and supplements to promote and maintain good health are being proposed and developed. As raw materials of such functional drinks and supplements, various naturally-occurring raw materials can be mentioned in addition to amino acids and lactic acid bacteria conventionally used. Specifically, various supplements containing maca, sesamin, yeast extract, turmeric, agaricus, cat's-claw, *Phellinus Linteus*, or propolis are commercially available.

However, it is hard to say that these raw materials are suitable for drinks or supplements for their distinctive odors or flavors. Therefore, various measures are taken to make it easy to consume them.

Among these raw materials, maca (*Lepidium meyenii Walp*) is a plant of the mustard family native to the highlands of Andes in Peru, South America. Maca grows with its leaves spreading close to the ground, and has a turnip-like root. Maca has been cultivated in the Andes region for over 2,000 years and used as a foodstuff for maintaining good health. Maca mainly contains polysaccharides and proteins. Further, maca contains high amounts of amino acids, especially essential amino acids that the body cannot make and must be supplied by food. In addition to amino acids, maca also contains various vitamins (e.g., the vitamin B group, vitamin C, vitamin E) and minerals (e.g., calcium, iron, zinc) in abundance. In Peru, several tens of food products manufactured using maca (e.g., cookies, juice "CHICHA DE MACA", maca liquor) are available. Further, powder of maca is also taken with, for example, yogurt. As described above, maca is a popular foodstuff for maintaining good health.

Conventionally, it has been known that maca has a revitalizing or tonic effect. Further, US Patent No. 6267995 B1 has disclosed that a composition obtained from maca has antitumor activity and the effect of improving sexual function. Furthermore, Translated National Publication of International Patent Application No. 2003-523945 has disclosed that a composition obtained by using maca and antler in combination has the effect of increasing the testosterone level of a human. Moreover, it has been reported that there is a possibility that maca has an anti-inflammatory effect or maca can be used as an antiallergic agent ("Medicine and Biology," Vol. 145, No. 6, pp. 81-86, 2002. 12. 10).

Recently, various beauty and health-conscious products are coming along in the field of alcoholic beverages. Since maca is receiving attention for the effects described above, it can be said that an alcoholic beverage containing maca is preferable from the viewpoint of beauty and health. In fact, maca liquor has been consumed for a long time in the Andes region to maintain good health. However, maca liquor consumed in the Andes region does not suit the taste of modern people due to a distinctive odor of maca. For this reason, it cannot be said that maca liquor is a popular alcoholic beverage.

From the viewpoint of beauty and health, it is to be desired that a maca-containing alcoholic beverage which has no odor of maca and is easy to drink be developed. However, up to now, such a maca-containing alcoholic beverage has been hardly investigated.

It is therefore an object of the present invention to provide an alcoholic beverage containing an extract of maca having various excellent properties, which has less odor of extract of maca, and is easy to drink.

In order to achieve the above object, the present inventors have intensively investigated. As a result, they have found that by using a distilled liquor mainly made from fermented muscat grapes as a base alcohol to which an extract of maca is to be added and allowing the distilled liquor to contain acetic acid in an amount within a specific range, it is possible to mask the odor of extract of maca contained in the distilled liquor, thereby enabling a maca extract-containing alcoholic beverage with less odor of maca to be obtained. Such findings have led to the completion of the present invention.

One aspect of the present invention is directed to:
(1) a maca extract-containing alcoholic beverage comprising:
   an extract of maca; and
   a distilled liquor mainly made from fermented muscat grapes, wherein the distilled liquor contains 1 to 400 ppm of acetic acid with respect to the amount of pure alcohol contained therein;
(2) the maca extract-containing alcoholic beverage according to (1) described above, wherein 1 part by weight (in terms of solid matter) of the extract of maca is contained in 0.5 to 1,000 parts by weight of the distilled liquor;
(3) the maca extract-containing alcoholic beverage according to (1) or (2) described above, further comprising fruit juice;
(4) the maca extract-containing alcoholic beverage according to (3) described above, wherein the fruit juice is lemon juice, grapefruit juice and/or lime juice;
(5) the maca extract-containing alcoholic beverage according to any one of (1) to (4) described above, further comprising an extract of herb;
(6) the maca extract-containing alcoholic beverage according to (5) described above, wherein the extract of herb is spirits containing an extract of rose hip;
(7) the maca extract-containing alcoholic beverage according to any one of (1) to (6) described above, wherein the extract of maca is obtained by adding an ethanol-containing aqueous solution to pulverized maca to carry out extraction at 20 to 75°C; and
(8) the maca extract-containing alcoholic beverage according to any one of (1) to (7) described above, which is a carbonated beverage.

Another aspect of the present invention is directed to:
(9) a method for decreasing an odor of extract of maca contained in a maca extract-containing alcoholic beverage, the method comprising using a distilled liquor mainly made from fermented muscat grapes as a base alcohol to which an extract of maca is to be added, wherein the distilled liquor contains 1 to 400 ppm of acetic acid with respect to the amount of pure alcohol contained therein;
(10) the method for decreasing an odor of extract of maca contained in a maca extract-containing alcoholic beverage according to (9) described above, further comprising allowing the alcoholic beverage to contain fruit juice;
(11) the method for decreasing an odor of extract of maca contained in a maca extract-containing alcoholic beverage according to (10) described above, wherein the fruit juice is lemon juice, grapefruit juice, and/or lime juice;
(12) the method for decreasing an odor of extract of maca contained in a maca extract-containing alcoholic beverage according to (11) described above, further comprising allowing the alcoholic beverage to contain an extract of herb;
(13) the method for decreasing an odor of extract of maca contained in a maca extract-containing alcoholic beverage according to (12) described above, wherein the extract of herb is spirits containing an extract of rose hip; and
(14) the method for decreasing an odor of extract of maca contained in a maca extract-containing alcoholic beverage according to any one of (9) to (13) described above, further comprising allowing the alcoholic beverage to contain a carbonic acid.

Still another aspect of the present invention is directed to:
(15) a method for manufacturing a maca extract-containing alcoholic beverage, the method comprising: preparing a distilled liquor mainly made from fermented muscat grapes and containing 1 to 400 ppm of acetic acid with respect to the amount of pure alcohol contained therein; and allowing the distilled liquor to contain an extract of maca.

According to the present invention, it is possible to provide an alcoholic beverage containing an extract of maca having various excellent properties. The maca extract-containing alcoholic beverage according to the present invention is easy to drink because a distinctive odor of extract of maca is masked. Conventional maca liquor manufactured in the Andes region has a distinctive odor of maca and therefore it is difficult to drink it as is. On the other hand, the alcoholic beverage containing an extract of maca according to the present invention does not have a distinctive odor of maca and is pleasant to the taste. The alcoholic beverage according to the present invention is epoch-making in that it is a beauty and health-conscious alcoholic beverage easy to drink for women.

An alcoholic beverage containing an extract of maca according to the present invention (hereinafter, simply referred to as a "maca extract-containing alcoholic beverage") is basically obtained by adding an extract of maca to a distilled liquor which is mainly made from fermented muscat grapes and contains 1 to 400 ppm of acetic acid with respect to the amount of pure alcohol contained therein.

The present inventors have intensively investigated to find an alcoholic beverage (a base alcohol) enabling the odor of extract of maca contains therein to be decreased. As a result, they have found that the distilled liquor mainly made from fermented muscat grapes can decrease the odor of extract of maca contained therein. Specifically, flavor components derived from muscat grapes are condensed through fermentation and distillation, and the thus obtained aroma of the distilled liquor decreases the odor of extract of maca by masking it. Such a masking effect is specific to a distilled liquor mainly made from fermented muscat grapes, and cannot be achieved by other distilled liquors, brandy, or whiskey.

It is to be noted that there is no necessity to store the above-described distilled liquor mainly made from fermented muscat grapes after distillation. An example of such the distilled liquor includes pisco that is a locally-brewed liquor of South America.

However, the present inventors have also found that even in the case where such a distilled liquor is used as a base alcohol to which an extract of maca is to be added, it is not possible to perfectly mask the odor of extract of maca. Therefore, the present inventors have further intensively investigated, and as a result they have found that by allowing the distilled liquor to contain acetic acid in an amount within a specific range, it is possible to almost perfectly mask the odor of extract of maca contained in the distilled liquor. In this case, the acetic acid content of the distilled liquor is preferably in the range of 1 to 400 ppm with respect to the amount of pure alcohol contained therein. If the acetic acid content is less than 1 ppm, it is not possible to mask the odor of extract of maca. On the other hand, if the acetic acid content exceeds 400 ppm, it is possible to mask the odor of extract of maca but ease of drinking is impaired.

The maca extract-containing alcoholic beverage according to the present invention may further contain other raw materials such as fruit juice, spirits, saccharides, and herb extract. Examples of fruit juice include strawberry juice, grapefruit juice, Japanese plum juice, Kyoho grape juice, apple juice, peach juice, pear juice, cranberry juice, melon juice, lemon juice, and lime juice. These fruit juices can be used singly or in combination of two or more of them. Among them, the use of lemon juice, grapefruit juice, and/or lime juice makes it possible to provide a maca extract-containing alcoholic beverage pleasant to the taste.

As for herb extract, various herb extracts can be used. Among them, by adding rose hip extract to the maca extract-containing alcoholic beverage according to the present invention, it is possible to further mask the odor of extract of maca. As such rose hip extract, spirits containing rose hip extract is preferably added. Further, in the case where grape spirits and spirits containing rose hip extract are added together, they synergize to enhance the effect of masking the odor of extract of maca.

An extract of maca to be used in the present invention is obtained by adding an ethanol-containing aqueous solution to pulverized maca to carry out extraction. Particularly, extraction is preferably carried out at 20 to 75°C. Such a method in which extraction is carried out at 40 to 80°C is unique in that it is possible to obtain an extract containing large amounts of medicinal components of maca. The present inventors have already applied for a patent on such an extraction method.

As for maca to be subjected to extraction in the present invention, all parts of the maca plant can be subjected to extraction at the same time, but flower, fruit, seed, stem including underground stem, and bulb thereof may be singly subjected to extraction. Among them, a bulb part of the maca plant is particularly preferably used. These parts of the maca plant may be dried, pulverized, or cut when necessary before subjected to extraction.

When extraction is carried out, the mixing ratio between maca and a solvent is not particularly limited, but the amount of a solvent to be used is preferably about 0.3 to 5,000 times by weight with respect to 1 part by weight of maca. Particularly preferably, the amount of a solvent to be used is 5 to 100 times by weight with respect to 1 part by weight of maca from the viewpoint of ease of operation in extraction and extraction efficiency.

Extraction time is not particularly limited. According to a conventional method, there is a case where it takes several days to several weeks or more to complete extraction. However, by carrying out extraction at a temperature within a specific range using a solvent with specific ethanol content according to the present invention, it is possible to complete extraction in 1 minute to 72 hours, especially 10 minutes to 5 hours.

In the present invention, the thus obtained extract of maca may be used as it is, or may be concentrated by partially or entirely evaporating a solvent. Further, the thus obtained concentrate may be formed into powder by adding an excipient or the like thereto. Among them, a concentrate of maca extract is preferably used because it is small in volume and is highly dissolved, and well dispersed, in the distilled liquor.

In the present invention, the amounts of these raw materials to be used for the maca extract-containing alcoholic beverage are not particularly limited. For example, 0.5 to 1,000 parts by weight of a distilled liquor mainly made from fermented muscat grapes (containing 1 to 400 ppm of acetic acid with respect to the amount of pure alcohol contained therein), 0.3 to 100 parts by weight of fruit juice, and 0.3 to 100 parts by weight of an extract of herb are preferably used with respect to 1 part by weight (in terms of solid matter) of maca extract. It is to be noted that the amount of maca extract in terms of solid matter is determined by measuring the amount of a concentrate obtained by entirely removing a solvent from the maca extract. Alternatively, the amount of maca extract in terms of solid matter may be calculated from a brix value of the extract in the form of solution.

The maca extract-containing alcoholic beverage obtained in accordance with the above-mentioned composition may further contain other alcoholic beverages or various additives. Other alcoholic beverages to be added are not particularly limited as long as they do not inhibit the effect of masking the odor of extract of maca and do not impair the flavor of the maca extract-containing alcoholic beverage. Examples of such alcoholic beverages include spirits, liqueurs, gin, vodka, tequila, brandy, whiskey, shochu (Japanese distilled spirits), and wine.

Further, the maca extract-containing alcoholic beverage obtained in accordance with the above-mentioned composition may contain carbonic acid. The pressure of carbonic acid gas is not particularly limited as long as it is appropriate as a gas pressure of carbonated beverages. For example, the pressure of carbonic acid gas may be 0.1 to 3 kg/cm². By setting the pressure of carbonic acid gas to a value within the above range, the effect of masking the odor of extract of maca is not inhibited, and the flavor of the alcoholic beverage is not impaired.

The main theme of the maca extract-containing alcoholic beverage according to the present invention is "beauty and health" based on properties specific to an extract of maca. Therefore, an alcoholic beverage to be added in addition to a base alcohol is preferably spirits, particularly preferably grape spirits. The alcohol content of the maca extract-containing alcoholic beverage according to the present invention should not be too high. Specifically, the alcohol content of the maca extract-containing alcoholic beverage is preferably equal to that of low-alcohol carbonated beverages, Japanese sake, or wine, that is, in the range of about 3 to 17 %.

As additives to be added to the maca extract-containing alcoholic beverage according to the present invention, antioxidants, stabilizers, glycosides, corrigents, coloring agents, flavoring ingredients, vitamins, and the like can be mentioned.

Examples of antioxidants include catechin, isoflavone, rutin, quercetin, chlorogenic acid, vitamin P, and an extract of bayberry.

Examples of stabilizers include xanthan gum, carrageenan, and proteins such as rennet casein.

Examples of glycosides include rutin glycoside, quercetin glycoside, and vitamin P glycoside.

Examples of corrigents include glycin, glycyrrhizic acid, salts thereof, and common salt.

A coloring agent to be added is not particularly limited as long as its safety as a food additive is assured. Examples of such a coloring agent include Food Red No. 2, Food Red No. 3, Food Red No. 40, Food Red No. 102, Food Red No. 104, Food Red No. 105, Food Red No. 106, Food Yellow No. 4, Food Yellow No. 5, Food Blue No. 1, Food Blue No. 2, Food Red No. 2 aluminum chelate, Food Yellow No. 4 aluminum chelate, Food Yellow No. 5 aluminum chelate, Food Blue No. 1 aluminum chelate, and Food Blue No. 2 aluminum chelate.

As flavoring ingredients to be added, for example, natural flavoring ingredients and synthetic flavoring ingredients can be mentioned. Examples of natural flavoring ingredients include flavor-containing materials prepared using a root of grass, bark, flower, fruit, pericarp, or other plants as a raw material(s) in the usual manner. Also included in such natural flavoring ingredients are essential oil components separated from natural raw materials by steam distillation, pressing, or extraction.

In addition, coffee-derived flavoring ingredients, tea-derived flavoring ingredients, green tea-derived flavoring ingredients, oolong tea-derived flavoring ingredients, cocoa-derived flavoring ingredients, herb-derived flavoring ingredients, spice-derived flavoring ingredients, fruit-derived flavoring ingredients, and the like can also be mentioned.

Examples of vitamins include vitamin A, vitamin B₁, vitamin B₂, vitamin B₆, vitamin B₁₂, vitamin C (ascorbic acid), vitamin D, vitamin E, niacin, calcium pantothenate, and folic acid.

### Examples

Hereinbelow, the present invention will be described in more detail with reference to Examples, but the present invention is not limited to these Examples.

### Example 1: Manufacture of extract of maca

Maca was dried and pulverized, and 3 kg of the maca was placed in a stainless container. 30 L of an aqueous solution containing 99 vol% of ethanol was added thereto, and then they were stirred for 3 hours at 60°C. The thus obtained solution was filtered to obtain filtrate, and then the solvent was removed from the filtrate to obtain 180 g of an extract of maca.

### Example 2: Evaluation of effect of decreasing odor of maca, obtained by using distilled liquor mainly made from fermented muscat grapes

Various alcoholic beverages with an alcohol content of 10 % and a maca extract content of 0.2 % were manufactured using base alcoholic beverages listed in Table 1 and the extract of maca obtained in Example 1. A sensory test was carried out by 20 adults to evaluate the masking effect on the odor of maca of each of the alcoholic beverages.

It is to be noted that the masking effect was evaluated according to the following two criteria.
○: The masking effect was confirmed.
X: The masking effect was not confirmed.

Evaluation results are shown in Table 1.

**Table 1**

| Base alcoholic beverages | Masking Effect |
|---|---|
| Distilled liquor mainly made from fermented muscat grapes | ○ |
| Shochu made from rice | X |
| Shochu made from barley | X |
| Japanese sake | X |
| Brandy | X |
| Whiskey | X |
| Red Wine | X |
| White Wine | X |
| Vodka | X |
| Gin | X |

As shown in Table 1, only the distilled liquor according to the present invention mainly made from fermented muscat grapes had the effect of masking the odor of the extract of maca contained therein.

### Example 3 Evaluation of effect of decreasing odor of maca, obtained by adding acetic acid to alcoholic beverage

As described in Example 2, in the case where a distilled liquor mainly made from fermented muscat grapes (that is, a distilled liquor according to the present invention) was used as a base alcoholic beverage, the effect of masking the odor of maca contained therein was confirmed. Therefore, alcoholic beverages with an alcohol content of 10 %, a maca extract content of 0.1 or 0.2 % were manufactured using the distilled liquor (with various acetic acid contents) according to the present invention as a base alcohol and the extract of maca obtained in Example 1. A sensory test was carried out by 20 adults to evaluate the masking effect of each of the alcoholic beverages with acetic acid on the odor of maca. Evaluation criteria were the same as those of Example 2. In addition, easy of drinking was also evaluated by carrying out a sensory test. Specifically, easy of drinking was evaluated on a scale from 1 point (very difficult to drink) to 5 points (very easy to drink) in 0.1 points intervals, wherein a standard score was set to 3 points. Irrespective of the maca extract content, easy of drinking was determined based on the score. In the case where the score was 3.0 or more, easy of drinking was determined.
○: Favorably and Easy to drinking.
X: Not easy to drinking.

As comparative base alcoholic beverages, shochu made from rice, shochu made from barley, red wine, white wine, whiskey, and brandy were used. The amount of acetic acid contained in each of the base alcoholic beverages was measured. Alcoholic beverages were manufactured in the same manner as in this Example 3 except for the used base alcoholic beverages.

Further, as a control base alcoholic beverage, alcohol for brewing was used. An alcoholic beverage was manufactured using the control base alcoholic beverage and the extract of maca in such a manner that the alcohol content became 10 % and a maca extract content became 0.1 or 0.2 %.

Evaluation results of these comparative and control alcoholic beverages are shown in Table 2.

**Table 2**

| Base alcoholic beverages | Acetic acid content (ppm / to the amount of pure alcohol) | Ease of drinking | | | | Masking effect of odor of maca |
|---|---|---|---|---|---|---|
| | | Maca extract content | | | Determined ease of drinking | |
| | | 0.0% | 0.1% | 0.2% | | |
| Alcohol for brewing | 0.0 | 5.0 | 4.2 | 3.2 | ○ | X |
| Distilled liquor of the invention | 0.5 | 5.0 | 4.2 | 3.2 | ○ | X |
| Ditto | 1.0 | 5.0 | 4.2 | 3.2 | ○ | ○ |
| Ditto | 68.2 | 5.0 | 4.2 | 3.2 | ○ | ○ |
| Ditto | 99.0 | 5.0 | 4.2 | 3.2 | ○ | ○ |
| Ditto | 148.0 | 5.0 | 4.1 | 3.1 | ○ | ○ |
| Ditto | 202.6 | 5.0 | 4.0 | 3.0 | ○ | ○ |
| Ditto | 313.0 | 5.0 | 4.0 | 3.0 | ○ | ○ |
| Ditto | 400.0 | 5.0 | 4.0 | 3.0 | ○ | ○ |
| Ditto | 414.2 | 4.0 | 3.0 | 2.0 | X | ○ |
| Ditto | 610.0 | 3.5 | 2.5 | 1.5 | X | ○ |
| Ditto | 1481.3 | 1.5 | 1.3 | 1.0 | X | ○ |
| Shochu made from barley | 71.9 | 5.0 | 3.5 | 2.5 | X | X |
| Shochu made from rice | 32.5 | 5.0 | 3.5 | 2.5 | X | X |
| Brandy | 738.9 | 5.0 | 3.5 | 2.5 | X | X |
| Whiskey | 620.0 | 5.0 | 3.5 | 2.5 | X | X |
| Red Wine | 516.7 | 5.0 | 3.5 | 2.5 | X | X |
| White Wine | 433.3 | 5.0 | 3.0 | 2.5 | X | X |

As shown in Table 2, as the maca extract content was increased, the odor of maca became stronger. Further, by adding acetic acid in such a manner that an acetic acid content became 1 ppm or more, the odor of maca was significantly masked. However, in the case where the acetic acid content was more than 400 ppm, ease of drinking was impaired. On the other hand, in the case where the acetic acid content was less than 1 ppm (that is, in the case of the distilled liquor containing 0.5 ppm of acetic acid or in the case of alcohol for brewing as a control), the effect of masking the odor of maca was not confirmed.

Although shochu made from rice, shochu made from barley, brandy, whiskey, red wine, and white wine per se contained acetic acid, alcoholic beverages manufactured using these base alcohols did not have the effect of decreasing the odor of maca extract contained therein.

As is clear from these results, even in the case where a maca extract content is 0.2 %, by using a distilled liquor mainly made from fermented muscat grapes as a base alcohol and allowing the distilled liquor to contain 1 to 400 ppm of acetic acid, it is possible to mask the odor of maca extract. Further, in the sensory test of ease of drinking, all the alcoholic beverages manufactured in such a manner were given a score equal to a standard score (3 points) or higher. These good results show the specificity of the present invention.

### Example 4: Evaluation of effect of decreasing odor of maca, obtained by adding herb extract to alcoholic beverage

A distilled liquor mainly made from fermented muscat grapes and containing 5.0 ppm or less of acetic acid with respect to the amount of pure alcohol contained therein was prepared. Then, alcoholic beverages were manufactured using the distilled liquor as a base alcohol and the extract of maca in such a manner that an alcohol content became 10 % and a maca extract content became 0.2 %. To the alcoholic beverages, herb extract such as rose hip extract, camu-camu extract, cat's-claw extract, hercampure extract, or quinoa extract was added in an amount shown in Table 3. A sensory test was carried out on these alcoholic beverages to evaluate the effect of masking the odor of maca and ease of drinking in the same manner as in Examples 2 and 3. The evaluation criteria of the sensory test were the same as those of Examples 2 and 3. Evaluation results are shown in Table 3.

**Table 3**

| Herb extract added to alcoholic beverage | Ease of drinking | | | | Masking effect of odor of maca |
|---|---|---|---|---|---|
| | Herb extract content (%) | | | | |
| | 0.1 | 0.5 | 1.5 | 5.0 | |
| Rose hip extract | 3.4 | 3.8 | 4.2 | 3.4 | ○ |
| Camu-camu extract | 3.2 | 2.5 | 2.0 | 1.0 | ○ |
| Cat's-claw extract | 1.3 | 1.2 | 1.1 | 1.0 | ○ |
| Hercampure extract | 1.3 | 1.2 | 1.1 | 1.0 | ○ |
| Quinoa extract | 3.2 | 3.4 | 3.4 | 3.0 | ○ |

As is clear from Table 3, by adding rose hip extract, it is possible to enhance the effect of masking the odor of maca and ease of drinking of the alcoholic beverage.

### Example 5: Manufacture of maca extract-containing alcoholic beverages 1 (Study of amount of distilled liquor to be added)

1 part by weight (in terms of solid matter) of the extract of maca, 0.5, 50, or 1,000 parts by weight of a distilled liquor mainly made from fermented muscat grapes (containing 10.0 ppm of acetic acid with respect to the amount of pure alcohol contained therein), 200 parts by weight of lemon juice, and 10 parts by weight of rose hip extract were mixed to prepare alcoholic beverages with an alcohol content of 10 %.

In all the thus obtained alcoholic beverages, a distinctive odor of the extract of maca was decreased.

### Example 6: Manufacture of maca extract-containing alcoholic beverages 2 (Study of alcohol content)

1 part by weight (in terms of solid matter) of the extract of maca, 50 parts by weight of a distilled liquor mainly made from fermented muscat grapes (containing 5.0 ppm of acetic acid with respect to the amount of pure alcohol contained therein), 100 parts by weight of lime juice, and 10 parts by weight of rose hip extract were mixed to prepare alcoholic beverages with an alcohol content of 4, 10, or 20 %. Then, carbonic acid was added to the alcoholic beverages at a gas pressure of 0.5 kg/cm² to obtain alcohol-containing carbonated beverages.

In all the thus obtained alcohol-containing carbonated beverages, a distinctive odor of the extract of maca was decreased.

### Example 7: Manufacture of maca extract-containing alcoholic beverages 3 (Study of amount of fruit juice to be added)

1 part by weight (in terms of solid matter) of the extract of maca, 50 parts by weight of a distilled liquor mainly made from fermented muscat grapes (containing 3.0 ppm of acetic acid with respect to the amount of pure alcohol contained therein), 100, 500, or 1,000 parts by weight of grapefruit juice, and 10 parts by weight of rose hip extract were mixed to prepare alcoholic beverages with an alcohol content of 4 %. Then, carbonic acid was added to the alcoholic beverages at a gas pressure of 2.5 kg/cm² to obtain alcohol-containing carbonated beverages.

In all the thus obtained alcohol-containing carbonated beverages, a distinctive odor of the extract of maca was decreased.

As described above, a maca extract-containing alcoholic beverage according to the present invention contains an extract of maca having various excellent properties, and is easy to drink because a distinctive odor of the extract of maca is masked. Therefore, the maca extract-containing alcoholic beverage according to the present invention is epoch-making in that it is a beauty and health-conscious alcoholic beverage pleasant to the taste and easy to drink for women.

## Claims

1. A maca extract-containing alcoholic beverage comprising:
an extract of maca; and
a distilled liquor mainly made from fermented muscat grapes, wherein
the distilled liquor contains 1 to 400 ppm of acetic acid with respect to the amount of pure alcohol contained therein.

2. The maca extract-containing alcoholic beverage according to claim 1, wherein 1 part by weight of the extract of maca in terms of solid matter is contained in 0.5 to 1,000 parts by weight of the distilled liquor.

3. The maca extract-containing alcoholic beverage according to claim 1 or 2, further comprising fruit juice.

4. The maca extract-containing alcoholic beverage according to claim 3, wherein the fruit juice is one selected from the group consisting of lemon juice, grapefruit juice, and lime juice.

5. The maca extract-containing alcoholic beverage according to any one of claims 1 to 4, further comprising an extract of herb.

6. The maca extract-containing alcoholic beverage according to claim 5, wherein the extract of herb is spirits containing an extract of rose hip.

7. The maca extract-containing alcoholic beverage according to any one of claims 1 to 6, wherein the extract of maca is obtained by adding an ethanol-containing aqueous solution to pulverized maca to carry out extraction at 20 to 75°C.

8. The maca extract-containing alcoholic beverage according to any one of claims 1 to 7, which is a carbonated beverage.

9. A method for decreasing an odor of extract of maca contained in a maca extract-containing alcoholic beverage, the method comprising using a distilled liquor mainly made from fermented muscat grapes as a base alcohol to which an extract of maca is to be added, wherein the distilled liquor contains 1 to 400 ppm of acetic acid with respect to the amount of pure alcohol contained therein.

10. The method for decreasing an odor of extract of maca contained in a maca extract-containing alcoholic beverage according to claim 9, further comprising allowing the alcoholic beverage to contain fruit juice.

11. The method for decreasing an odor of extract of maca contained in a maca extract-containing alcoholic beverage according to claim 10, wherein the fruit juice is one selected from the group consisting of lemon juice, grapefruit juice, and lime juice.

12. The method for decreasing an odor of extract of maca contained in a maca extract-containing alcoholic beverage according to claim 11, further comprising allowing the alcoholic beverage to contain an extract of herb.

13. The method for decreasing an odor of extract of maca contained in a maca extract-containing alcoholic beverage according to claim 12, wherein the extract of herb is spirits containing an extract of rose hip.

14. The method for decreasing an odor of extract of maca contained in a maca extract-containing alcoholic beverage according to any one of claims 9 to 13, further comprising allowing the alcoholic beverage to contain a carbonic acid.

15. A method for manufacturing a maca extract-containing alcoholic beverage, the method comprising: preparing a distilled liquor mainly made from fermented muscat grapes and containing 1 to 400 ppm of acetic acid with respect to the amount of pure alcohol contained therein; and allowing the distilled liquor to contain an extract of maca.

## Patentansprüche

1. Ein Macaextrakt enthaltendes alkoholisches Getränk, umfassend:
einen Macaextrakt; und
eine destillierte Flüssigkeit, die hauptsächlich aus fermentierten Muskattrauben hergestellt wurde, wobei
die destillierte Flüssigkeit 1 bis 400 ppm Essigsäure, bezogen auf die Menge an darin enthaltenem reinem Alkohol, enthält.

2. Das Macaextrakt enthaltende alkoholische Getränk nach Anspruch 1, wobei 1 Gewichtsteil des Macaextrakts, bezogen auf den Feststoffgehalt, in 0,5 bis 1.000 Gewichtsteilen der destillierten Flüssigkeit enthalten ist.

3. Das Macaextrakt enthaltende alkoholische Getränk nach Anspruch 1 oder 2, welches weiter Fruchtsaft umfasst.

4. Das Macaextrakt enthaltende alkoholische Getränk nach Anspruch 3, wobei der Fruchtsaft einer ist, der aus der Gruppe bestehend aus Zitronensaft, Grapefruitsaft und Limettensaft ausgewählt ist.

5. Das Macaextrakt enthaltende alkoholische Getränk nach einem der Ansprüche 1 bis 4, welches weiter einen Kräuterextrakt umfasst.

6. Das Macaextrakt enthaltende alkoholische Getränk nach Anspruch 5, wobei der Kräuterextrakt eine Spirituose ist, die einen Hagebuttenextrakt enthält.

7. Das Macaextrakt enthaltende alkoholische Getränk nach einem der Ansprüche 1 bis 6, wobei der Macaextrakt durch Zugabe einer Ethanol enthaltenden wässrigen Lösung zu pulverisiertem Maca, um eine Extraktion bei 20 bis 75°C durchzuführen, erhalten wird.

8. Das Macaextrakt enthaltende alkoholische Getränk nach einem der Ansprüche 1 bis 7, bei welchem es sich um ein kohlensäurehaltiges Getränk handelt.

9. Ein Verfahren zum Verringern eines Geruchs von Macaextrakt, der in einem Macaextrakt enthaltenden alkoholischen Getränk enthalten ist, wobei das Verfahren das Verwenden einer destillierten Flüssigkeit, die hauptsächlich aus fermentierten Muskattrauben hergestellt wurde, als Grundalkohol, dem ein Macaextrakt zuzugeben ist, umfasst, wobei die destillierte Flüssigkeit 1 bis 400 ppm Essigsäure, bezogen auf die Menge an darin enthaltenem reinem Alkohol, enthält.

10. Das Verfahren nach Anspruch 9 zum Verringern eines Geruchs von Macaextrakt, der in einem Macaextrakt enthaltenden alkoholischen Getränk enthalten ist, weiter umfassend, dass das alkoholische Getränk Fruchtsaft enthalten kann.

11. Das Verfahren nach Anspruch 10 zum Verringern eines Geruchs von Macaextrakt, der in einem Macaextrakt enthaltenden alkoholischen Getränk enthalten ist, wobei der Fruchtsaft einer ist, der aus der Gruppe bestehend aus Zitronensaft, Grapefruitsaft und Limettensaft ausgewählt ist.

12. Das Verfahren nach Anspruch 11 zum Verringern eines Geruchs von Macaextrakt, der in einem Macaextrakt enthaltenden alkoholischen Getränk enthalten ist, weiter umfassend, dass das alkoholische Getränk einen Kräuterextrakt enthalten kann.

13. Das Verfahren nach Anspruch 12 zum Verringern eines Geruchs von Macaextrakt, der in einem Macaextrakt enthaltenden alkoholischen Getränk enthalten ist, wobei der Kräuterextrakt eine Spirituose ist, die einen Hagebuttenextrakt enthält.

14. Das Verfahren nach einem der Ansprüche 9 bis 13 zum Verringern eines Geruchs von Macaextrakt, der in einem Macaextrakt enthaltenden alkoholischen Getränk enthalten ist, weiter umfassend, dass das alkoholische Getränk eine Kohlensäure enthalten kann.

15. Ein Verfahren zur Herstellung eines Macaextrakt enthaltenden alkoholischen Getränks, wobei das Verfahren umfasst: Herstellen einer destillierten Flüssigkeit, die hauptsächlich aus fermentierten Muskattrauben hergestellt wurde und 1 bis 400 ppm Essigsäure, bezogen auf die Menge an darin enthaltenem reinem Alkohol, enthält; und wobei die destillierte Flüssigkeit einen Macaextrakt enthalten kann.

## Revendications

1. Boisson alcoolisée contenant de l'extrait de maca comprenant :
un extrait de maca ; et
un liquide distillé produit essentiellement à partir de raisins muscat fermentés,
où
le liquide distillé contient 1 à 400 ppm d'acide acétique par rapport à la quantité d'alcool pur qu'il contient.

2. Boisson alcoolisée contenant de l'extrait de maca selon la revendication 1, où 1 partie en poids de l'extrait de maca en termes de matière solide est contenue dans 0,5 à 1 000 parties en poids de liquide distillé.

3. Boisson alcoolisée contenant de l'extrait de maca selon la revendication 1 ou 2, comprenant en outre du jus de fruit.

4. Boisson alcoolisée contenant de l'extrait de maca selon la revendication 3, où le jus de fruit est un jus sélectionné dans le groupe constitué du jus de citron, du jus de pamplemousse et du jus de citron vert.

5. Boisson alcoolisée contenant de l'extrait de maca selon l'une quelconque des revendications 1 à 4, comprenant en outre un extrait de plantes herbacées.

6. Boisson alcoolisée contenant de l'extrait de maca selon la revendication 5, où l'extrait de plantes herbacées est un spiritueux contenant un extrait de cynorrhodon.

7. Boisson alcoolisée contenant de l'extrait de maca selon l'une quelconque des revendications 1 à 6, où l'extrait de maca est obtenu par addition d'une solution aqueuse contenant de l'éthanol à du maca pulvérisé pour réaliser une extraction à 20 à 75°C.

8. Boisson alcoolisée contenant de l'extrait de maca selon l'une quelconque des revendications 1 à 7, laquelle est une boisson gazéifiée.

9. Procédé de réduction d'un odeur d'un extrait de maca contenu dans une boisson alcoolisée contenant de l'extrait de maca, le procédé comprenant l'utilisation d'un liquide distillé produit essentiellement à partir de raisins muscat fermentés comme alcool de base auquel doit être ajouté un extrait de maca, où le liquide distillé contient 1 à 400 ppm d'acide acétique par rapport à la quantité d'alcool pur qu'il contient.

10. Procédé de réduction d'un odeur d'un extrait de maca contenu dans une boisson alcoolisée contenant de l'extrait de maca selon la revendication 9, comprenant en outre la possibilité pour la boisson alcoolisée de contenir du jus de fruit.

11. Procédé de réduction d'un odeur d'un extrait de maca contenu dans une boisson alcoolisée contenant de l'extrait de maca selon la revendication 10, où le jus de fruit est un jus sélectionné dans le groupe constitué du jus de citron, du jus de pamplemousse et du jus de citron vert.

12. Procédé de réduction d'un odeur d'un extrait de maca contenu dans une boisson alcoolisée contenant de l'extrait de maca selon la revendication 11, comprenant en outre la possibilité pour la boisson alcoolisée de contenir un extrait de plantes herbacées.

13. Procédé de réduction d'un odeur d'un extrait de maca contenu dans une boisson alcoolisée contenant de l'extrait de maca selon la revendication 12, où l'extrait de plantes herbacées est un spiritueux contenant un extrait de cynorrhodon.

14. Procédé de réduction d'un odeur d'un extrait de maca contenu dans une boisson alcoolisée contenant de l'extrait de maca selon l'une quelconque des revendications 9 à 13, comprenant en outre la possibilité pour la boisson alcoolisée de contenir un acide carbonique.

15. Procédé de préparation d'une boisson alcoolisée contenant de l'extrait de maca, le procédé comprenant : la préparation d'un liquide distillé produit essentiellement à partir de raisins muscat fermentés et contenant 1 à 400 ppm d'acide acétique par rapport à la quantité d'alcool pur qu'il contient; et la possibilité pour le liquide distillé de contenir un extrait de maca.
